# EUROPEAN PATENT APPLICATION

(11) **EP 4 270 806 A1**
(43) Date of publication of application: **01.11.2023**
(21) Application number: 22170692.2
(22) Date of filing: 29.04.2022
(51) Int. Cl.: H04B 7/022, G01S 13/00, H04L 5/00, G01S 7/00

(54) **SYSTEM FOR WIRELESS COMMUNICATION WITH RADAR SENSING, CORRESPONDING METHOD AND DEVICE**

(71) Applicant: Imec VZW, 3001 Leuven (BE); Katholieke Universiteit Leuven, 3000 Leuven (BE)
(72) Inventor: Sakhnini, Adham, 3001 Heverlee (BE); Bourdoux, Andre, 4910 Theux (BE); Guenach, Mamoun, 1800 Vilvoorde (BE)
(74) Representative: Körfer, Thomas

(57) **Abstract**

A system (10) for wireless communication with radar sensing with respect to at least one radar target (11a, 11b) is provided. Said system (10) comprises at least one control unit (12), at least one mobile node (13a, 13b), and at least two static nodes (14a-g). In this context, the at least one control unit (12) is configured to configure at least one of the at least two static nodes as at least one radar transmitting node (14a, 14b). In addition to this, the at least one radar transmitting node (14a, 14b) is configured to participate in an uplink training with respect to the at least one mobile node (13a, 13b).

## Description

The invention relates to a system for wireless communication with radar sensing, especially for wireless communication with simultaneous radar sensing, with respect to at least one radar target, a method for wireless communication with radar sensing, especially for wireless communication with simultaneous radar sensing, with respect to at least one radar target, and a device for wireless communication with radar sensing, especially for wireless communication with simultaneous radar sensing, with respect to at least one radar target with the aid of at least one mobile node and at least two static nodes.

Generally, in times of an increasing number of applications providing radar sensing capabilities, exemplarily in the context of autonomous driving, in-cabin radar, pedestrian monitoring, environment mapping, optimizing the network, or wireless networks such as 6G networks, exemplarily for indoors and outdoors sensing, there is a growing need of a system for wireless communication with radar sensing with respect to at least one radar target, and a method for wireless communication with radar sensing with respect to at least one radar target in order to make use of available or already existing communication applications, such as mobile communications, for radar sensing in a very cost-efficient and simple manner.

US 2020/0264266 A1 relates to a communication system, method and computer program product, which enable transmitting information via the same spectrum as a multiple-input multiple-output (MIMO) radar using the same spectrum.

First, a radar system conducts a search mode using a MIMO radar waveform. Second, an uplink communications transmitter employs a new type of signaling that allows the radar to search for targets in the spatial direction of the communication transmitter. Specifically, the MIMO radar can conduct a search task while receiving data from a communication transmitter using the same frequency allocation without blinding the MIMO radar in the direction of the target. However, in accordance with said document, it is not possible to integrate radar sensing into a communication system without the need of additional transceiver hardware, especially additional antennas, and/or without a modification of the used communication standard, which disadvantageously leads to a costly and elaborate implementation.

Accordingly, there is an object to provide a system for wireless communication with radar sensing with respect to at least one radar target, a method for wireless communication with radar sensing with respect to at least one radar target, and a device for wireless communication with radar sensing with respect to at least one radar target with the aid of at least one mobile node and at least two static nodes in order to allow for simultaneous communicating and radar sensing especially in the same time-frequency resources without needing additional hardware and/or modifying the used communication standard, thereby ensuring a high cost-efficiency and low complexity.

This object is solved by the features of the first independent claim for a system for wireless communication with radar sensing with respect to at least one radar target, the features of the second independent claim for a method for wireless communication with radar sensing with respect to at least one radar target, and the features of the third independent claim for a device for wireless communication with radar sensing with respect to at least one radar target with the aid of at least one mobile node and at least two static nodes. The dependent claims contain further developments.

According to a first aspect of the invention, a system for wireless communication with radar sensing with respect to at least one radar target is provided. Said system comprises at least one control unit, at least one mobile node, and at least two static nodes. In this context, the at least one control unit is configured to configure at least one of the at least two static nodes as at least one radar transmitting node. In addition to this, the at least one radar transmitting node is configured to participate in an uplink training with respect to the at least one mobile node. Advantageously, especially due to said uplink training participation, this allows for simultaneous communicating and radar sensing especially in the same time-frequency resources without needing additional hardware and/or modifying the used communication standard, especially a distributed MIMO (multiple input multiple output) standard, thereby ensuring a high cost-efficiency and low complexity.

It is noted that the system can be a distributed system or network or a collocated system or network. It is further noted that the nodes can be network nodes. Furthermore, the at least one control unit can be at least one processing unit or at least one processing and/or control unit. Moreover, the at least one control unit can be a central control unit or a central processing unit or a central processing and/or control unit. Besides, the at least one radar target can comprise or be at least one of the at least one mobile node.

With respect to the uplink training, it is noted that in this context, the at least one mobile node and/or the at least one radar transmitting node may send known data sequences. Advantageously, it can be controlled exactly which node sends these data sequences at which point of time. Further advantageously, the training sequences can be designed and/or the at least one mobile node and/or the at least one radar transmitting node can be coordinated such that said nodes send in such a way that both communications and radar can be done.

According to a first preferred implementation form of the first aspect of the invention, especially in the context of the uplink training, the at least one static node being not configured as the at least one radar transmitting node is configured as at least one radar receiving node preferably by the system or the at least one control unit. Advantageously, for instance, at each radar receiving node, the system or the at least one control unit, respectively, can estimate the respective channels of the at least one, preferably each, radar transmitting node and the at least one, preferably each, mobile node, which increases cost-efficiency and simplicity.

It is noted that at least one of the at least one radar receiving node can comprise at least one of the least one control unit.

According to a second preferred implementation form of the first aspect of the invention, especially in the context of the uplink training, the system or the at least one control unit, preferably the at least one static node being not configured as the at least one radar transmitting node, is configured to allocate pilot sequences to the at least one radar transmitting node and/or the at least one mobile node. Advantageously, for example, in this manner, cost-inefficiencies and complexity can further be reduced.

According to a further preferred implementation form of the first aspect of the invention, the at least one mobile node comprises or is a mobile phone or any movable communication device. Additionally or alternatively, the at least two static nodes comprise or are access points. Advantageously, for instance, already existing mobile communications can be used for allowing radar sensing exemplarily in the context of autonomous driving, in-cabin radar, pedestrian monitoring, environment mapping, optimizing the network, or wireless networks, such as Bluetooth networks, 5G networks, LTE networks, 6G networks, exemplarily for indoors and outdoors sensing, thereby ensuring a particularly high cost-efficiency and an eminently low complexity.

It is noted that the at least one radar target can comprise or be a traffic participant, especially a vehicle or a pedestrian.

According to a further preferred implementation form of the first aspect of the invention, the at least two static nodes are connected to the at least one control unit especially via a wireless or wired fronthaul. Advantageously, for example, local estimates of the at least one, preferably each, radar receiving node with respect to the at least one, preferably each, radar target can be forwarded to the at least one control unit through the fronthaul in a very cost-efficient and simple manner. Further advantageously, especially in this context, the at least one control unit, preferably a central processing and/or control unit, can perform centralized processing and localization, which additionally reduces cost-inefficiencies and complexity.

With respect to the fronthaul, it is noted that the fronthaul can comprise or be a link or connection. It is further noted that the fronthaul can also comprise wireless and wired connections or links, respectively, in combination.

According to a further preferred implementation form of the first aspect of the invention, the system is a wireless system. In addition to this or as an alternative, the system is a cell-free system. Additionally or alternatively, the system is a multiple input multiple output system. Further additionally or further alternatively, the system is based on time division duplex. Advantageously, for instance, a high flexibility can be ensured, which further increases the cost-efficiency.

With respect to the cell-free system, it is noted that said cell-free system can comprise or be a distributed and/or dense system.

Furthermore, the distributed system can also be a distributed multiple input multiple output system or a distributed massive multiple input multiple output system.

Moreover, with special respect to the cell-free system, it is noted that in a cell-free system or a cell-free network, respectively, an entire area is served by many static nodes or access points, respectively, and there is typically no concept of cells. All the access points are connected with at least one control unit or a central processing unit, respectively. All the control units or central processing units are typically interfaced with a core network. Furthermore, a cell-free network may comprise antenna units, antenna processing units, and central processing units. Many access points especially serve all the users in their area of influence. One user is preferably served by multiple access points in a cell-free network.

According to a further preferred implementation form of the first aspect of the invention, especially in the context of the uplink training, the system or the at least one control unit, preferably the at least one static node being not configured as the at least one radar transmitting node, is configured to perform at least one corresponding channel estimation with respect to the at least one radar transmitting node and/or the at least one mobile node. Advantageously, for example, each radar receiving node can form a channel estimate of each radar transmitting node and each mobile node, which can exemplarily be passed to a central processing and/or control unit for centralized processing and localization, thereby further increasing cost-efficiency and simplicity. Further advantageously, the respective channel scene can be received by the corresponding at least one radar receiving node.

According to a further preferred implementation form of the first aspect of the invention, the at least one control unit comprises or is a central processing and/or control unit, wherein the at least one corresponding channel estimation is performed by said central processing and/or control unit. Additionally or alternatively, the at least one corresponding channel estimation is based on a de-spreading technique and/or a minimum mean-square error technique. Advantageously, for instance, in this manner, complexity, and thus also cost-inefficiencies, can further be reduced.

Further advantageously, it is noted that the at least two static nodes can do channel estimation individually as well.

According to a further preferred implementation form of the first aspect of the invention, especially on the basis of the at least one corresponding channel estimation, the system or the at least one control unit, preferably the at least one static node being not configured as the at least one radar transmitting node, is configured to perform radar signal processing with respect to the at least one radar transmitting node preferably in order to localize the at least one radar target. Advantageously, for example, localization can also be performed in a centralized manner exemplarily in the case, when the radar receiving nodes forward their local radar target estimates to a central processing and/or control unit via a fronthaul, which leads to a further increased cost-efficiency and simplicity. Further advantageously, the radar functionality can also be used to do environment mapping or ground mapping, respectively.

According to a further preferred implementation form of the first aspect of the invention, the radar signal processing comprises or is multistatic radar processing. In addition to this or as an alternative, the radar signal processing estimates and/or makes use of at least one of amplitude, range, Doppler, angle of arrival, angle of departure, or any combination thereof. Advantageously, for instance, localization can be done over several radar receiving nodes, thereby further increasing accuracy in a cost-efficient manner.

According to a further preferred implementation form of the first aspect of the invention, especially based on the uplink training, the at least one radar transmitting node is configured to transmit known data preferably in the respective uplink payload. Advantageously, for example, in this manner, not only cost-efficiency but also simplicity can be ensured.

According to a further preferred implementation form of the first aspect of the invention, especially based on the uplink training, the at least one mobile node is configured to transmit unknown data preferably in the respective uplink payload. Advantageously, for instance, the radar receiving nodes can recover the respective mobile node data. Further advantageously, especially in this context, the radar receiving nodes can localize the respective radar targets, thereby ensuring both cost-efficiency and simplicity.

According to a further preferred implementation form of the first aspect of the invention, especially on the basis of the known data and/or unknown data as mentioned above, the system or the at least one control unit, preferably the at least one static node being not configured as the at least one radar transmitting node, is configured to recover at least one radar echo and/or at least one mobile node payload preferably by using the at least one corresponding channel estimation as mentioned above. Advantageously, for example, in this manner, radar target localization can be performed in a very cost-efficient and simple manner. Further advantageously, the radar sensing can be realized as a kind of a distributed bistatic radar system on top of the respective communication system.

Before a second aspect of the invention and its preferred implementation forms are explained, it is noted that all the benefits and further notes as discussed above regarding the first aspect and its preferred implementation forms do analogously apply in the following.

According to a second aspect of the invention, a method for wireless communication with radar sensing with respect to at least one radar target is provided. Said method comprises the steps of configuring at least one control unit of a system to configure at least one of at least two static nodes of the system as at least one radar transmitting node of the system, and configuring the at least one radar transmitting node of the system to participate in an uplink training with respect to at least one mobile node of the system. This again is especially useful in a distributed MIMO standard.

According to a first preferred implementation form of the second aspect of the invention, especially in the context of the uplink training, the at least one static node being not configured as the at least one radar transmitting node is configured as at least one radar receiving node preferably by the system or the at least one control unit.

In other words, especially in the context of the uplink training, the method comprises the step of configuring the at least one static node being not configured as the at least one radar transmitting node as at least one radar receiving node preferably with the aid of the system or the at least one control unit.

According to a second preferred implementation form of the second aspect of the invention, especially in the context of the uplink training, the method comprises the step of configuring the system or the at least one control unit, preferably the at least one static node being not configured as the at least one radar transmitting node, to allocate pilot sequences to the at least one radar transmitting node and/or the at least one mobile node.

According to a further preferred implementation form of the second aspect of the invention, the at least one mobile node comprises or is a mobile phone or any movable communication device. Additionally or alternatively, the at least two static nodes comprise or are access points.

According to a further preferred implementation form of the second aspect of the invention, the method comprises the step of connecting the at least two static nodes to the at least one control unit especially via a wireless or wired fronthaul.

According to a further preferred implementation form of the second aspect of the invention, the system is a wireless system. In addition to this or as an alternative, the system is a cell-free system. Additionally or alternatively, the system is a multiple input multiple output system. Further additionally or further alternatively, the system is based on time division duplex.

According to a further preferred implementation form of the second aspect of the invention, especially in the context of the uplink training, the method comprises the step of configuring the system or the at least one control unit, preferably the at least one static node being not configured as the at least one radar transmitting node, to perform at least one corresponding channel estimation with respect to the at least one radar transmitting node and/or the at least one mobile node.

According to a further preferred implementation form of the second aspect of the invention, the at least one control unit comprises or is a central processing and/or control unit, wherein the at least one corresponding channel estimation is performed by said central processing and/or control unit. Additionally or alternatively, the at least one corresponding channel estimation is based on a de-spreading technique and/or a minimum mean-square error technique.

Advantageously, other suitable channel estimation techniques such as zero forcing or maximum likelihood can also be used.

According to a further preferred implementation form of the second aspect of the invention, especially on the basis of the at least one corresponding channel estimation, the method comprises the step of configuring the system or the at least one control unit, preferably the at least one static node being not configured as the at least one radar transmitting node, to perform radar signal processing with respect to the at least one radar transmitting node preferably in order to localize the at least one radar target.

According to a further preferred implementation form of the second aspect of the invention, the radar signal processing comprises or is multistatic radar processing. In addition to this or as an alternative, the radar signal processing estimates and/or makes use of at least one of amplitude, range, Doppler, angle, angle of arrival, angel of departure, or any combination thereof.

According to a further preferred implementation form of the second aspect of the invention, especially based on the uplink training, the method comprises the step of configuring the at least one radar transmitting node to transmit known data preferably in the respective uplink payload.

According to a further preferred implementation form of the second aspect of the invention, especially based on the uplink training, the method comprises the step of configuring the at least one mobile node to transmit unknown data preferably in the respective uplink payload.

According to a further preferred implementation form of the second aspect of the invention, especially on the basis of the known data and/or unknown data as mentioned above, the method comprises the step of configuring the system or the at least one control unit, preferably the at least one static node being not configured as the at least one radar transmitting node, to recover at least one radar echo and/or at least one mobile node payload preferably by using the at least one corresponding channel estimation as mentioned above.

Before a third aspect of the invention and its preferred implementation forms are explained, it is noted that all the benefits and further notes as discussed above regarding the first aspect and its preferred implementation forms analogously apply in the following. In this context, the preferred implementation forms of the first aspect of the invention analogously apply for the third aspect of the invention.

According a third aspect of the invention, a device for wireless communication with radar sensing with respect to at least one radar target with the aid of at least one mobile node and at least two static nodes is provided. The device comprises a control unit, wherein the control unit is configured to configure at least one of the at least two static nodes as at least one radar transmitting node. In addition to this, the control unit is configured to configure the at least one radar transmitting node to participate in an uplink training with respect to the at least one mobile node.

According to a first preferred implementation form of the third aspect of the invention, the device further comprises at least one of the at least one mobile node or at least one of the at least two static nodes.

Exemplary embodiments of the invention are now further explained with respect to the drawings by way of example only, and not for limitation. In the drawings:
- Fig. 1: shows an exemplary embodiment of an inventive system;
- Fig. 2: shows an exemplary time-frequency transmission structure especially of a single access point in the sense of the invention;
- Fig. 3: shows an exemplary radar signal processing in the sense of invention especially regarding a static node;
- Fig. 4: shows an exemplary summarizing flow chart regarding the functionality of an inventive system;
- Fig. 5: shows an exemplary summarizing continuation of the flow chart according to Fig. 4;
- Fig. 6: shows an exemplary distribution of pilot, payload, and radar carriers in the sense of the invention;
- Fig. 7: shows a flow chart of an embodiment of the second aspect of the invention; and
- Fig. 8: shows an exemplary embodiment of the third aspect of the invention.

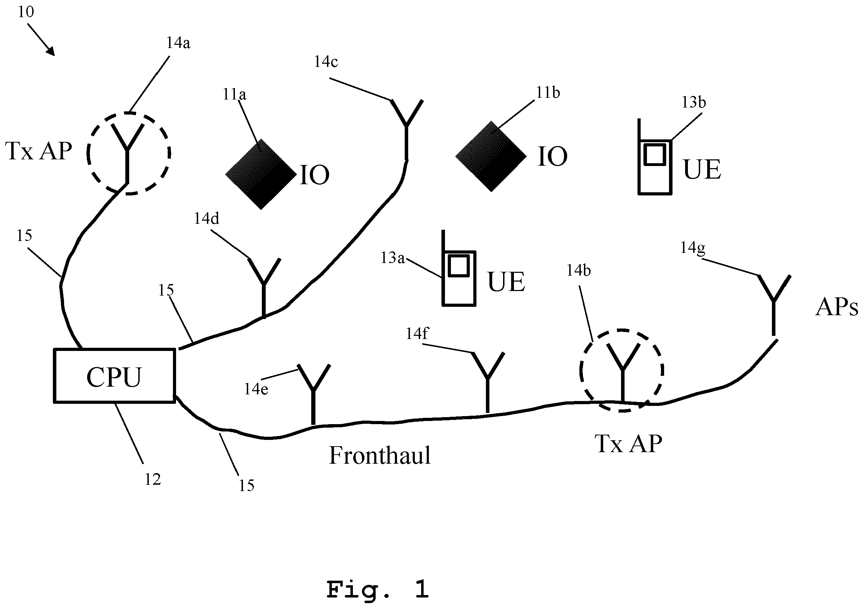

With respect to Fig. 1, an exemplary embodiment of an inventive system 10 for communication with radar sensing with respect to at least one radar target, exemplarily two radar targets or two interacting objects 11a, 11b, respectively, is shown. According to Fig. 1, said system 10 comprises at least one processing and/or control unit, exemplarily a central processing unit 12, at least one mobile node, exemplarily two mobile phones or two movable user equipments 13a, 13b, respectively, and at least two static nodes, exemplarily seven access points 14a-g.

With respect to the mobile and static nodes, it is noted that these nodes can also be mobile and static network nodes.

In this context, the central processing unit 12 is configured to configure at least one, exemplarily two, of the seven access points 14a-g as at least one radar transmitting network node, exemplarily two radar transmitting network nodes 14a, 14b. In addition to this, the two radar transmitting network nodes 14a, 14b are configured to participate in an uplink training with respect to the two user equipments 13a, 13b.

In this context, it is noted that the central processing unit 12 can be a stand-alone device or integrated in, for instance, one of the access points 14a-g.

Preferably, each of the two radar transmitting network nodes 14a, 14b is configured to participate in an uplink training with respect to the two user equipments 13a, 13b, especially with respect to each of the two user equipments 13a, 13b. As it can further be seen from Fig. 1, each of the access points 14a-g is connected to the central processing unit 12 via a fronthaul 15, which can be wireless or wired or a combination thereof.

It is noted that especially in the context of the above-mentioned uplink training, the at least one static network node, exemplarily each of the five network nodes 14c-g, being not configured as the two radar transmitting network node 14a, 14b is configured as at least one radar receiving network node, exemplarily five radar receiving network nodes 14c-g preferably by the system 10 or the central processing unit 12.

Generally, the invention enables the radar functionality in the same time and frequency resources as the uplink communication resources. As already mentioned above, one or several access points are used as radar transmitters and a group of access points as receivers, which preferably receives both of the radar signals and the user equipment signals.

Although this is counter-intuitive because it creates mutual interference from the radar transmitter(s) to the communication signals (the radar transmitting access points essentially act as jammers), and from the user equipment transmitters to the radar signal(s), the invention efficiently suppresses this mutual interference. Accordingly, the invention enables full reuse (and/or sharing) of the corresponding transceiver hardware.

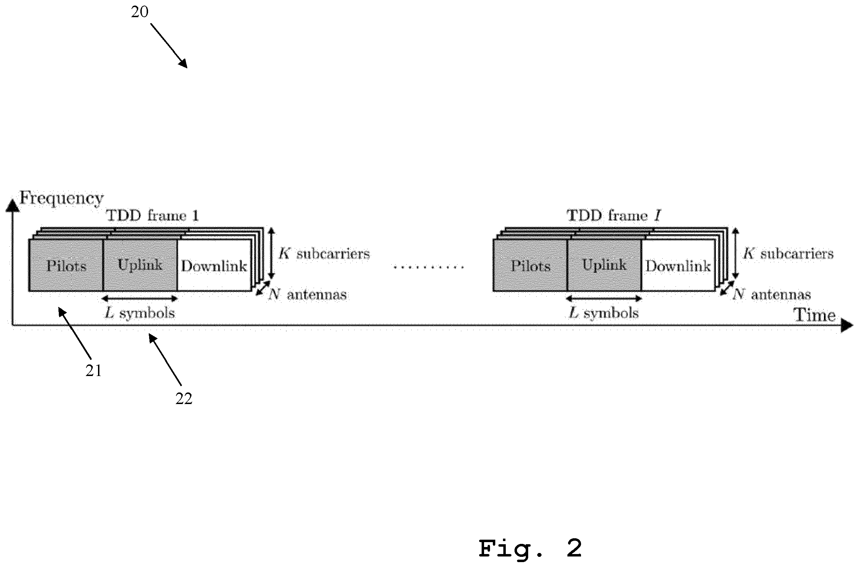

In this context, and especially in view of the system according to Fig. 1, an exemplarily time-frequency transmission structure in the sense of the invention especially of a single static network node or a single access point, respectively, is given in Fig. 2. As it can be seen from Fig. 2, there are I TDD (time division duplex) frames 20. Each TDD frame comprises a pilot phase 21 and an uplink phase 22.

Basically, in the pilot phase 21 or a pilot acquisition and training phase, respectively, the network or the system 10, respectively, exemplarily the central processing unit 12, first allocates a set of dedicated transmitting access points such as the access points 14a, 14b dedicated for radar transmission that is similar to the simultaneous user equipment transmission. The remaining access points such as the access points 14c-g serve as receivers.

Specifically, a set of radar transmitting network nodes or radar transmitting access points, respectively, dedicated for radar transmission is allocated. This can be done by a large-scale fading-based selection procedure, path-loss based selection procedure or something else. The remaining access points especially are radar receiving access points.

After the communication system such as the system 10 has allocated pilots to the user equipment such as the user equipment 13a, 13b, the network or the system 10, respectively, also allocates a set of pilot sequences to the radar transmitting network nodes. This can be done by random pilot assignment, heuristic pilot assignment or something else. Accordingly, the radar transmitting network nodes especially behave as user equipment, preferably stationary user equipment or stationary mobile network nodes, respectively.

It is noted that the usage of the radar transmitting network nodes, especially behaving as a kind of virtual user equipment, or the signals thereof, respectively, instead of user equipment signals is particularly advantageous in the sense of, for instance, synchronization, calibration, location, orientation, mobility, reliability, or the like.

Furthermore, during the uplink training duration, the radar transmitting network nodes are assigned to transmit at the same time-frequency resource as the user equipment or the mobile network nodes, respectively. This can be done via signaling through the fronthaul 15, wireless signaling over the air or by some other signaling capabilities.

Moreover, the radar receiving network nodes or the radar receiving access points, respectively, receive a sum of pilots preferably from both the mobile network nodes and the radar transmitting network nodes. Especially because the radar transmitting network nodes are mimicking the mobile network nodes, they are also referred to as virtual mobile network nodes. The radar receiving network nodes may especially treat the radar transmitting network nodes as virtual mobile network nodes and may preferably estimate the respective propagation channels especially following the communication standard. This can be done by with maximum ratio combining, zero-forcing combining, minimum mean-square error combining, or something else.

Now, with respect to the above-mentioned uplink phase 22 of Fig. 2 or a joint communications and radar phase, respectively, it is basically noted that the radar transmitting network nodes and the mobile network nodes may especially transmit simultaneously or at the same time, respectively, in the uplink in the same time-frequency resource blocks.

The radar receiving network nodes assigned by the network or the system 10, respectively, in the pilot acquisition and training phase may especially receive a sum of communication signals and radar echoes. The communication signals may preferably convey unknown symbols, especially unknown mobile network node data payload, whereas the radar signals may preferably convey known symbols.

Furthermore, the radar receiving network nodes may especially decode the mobile network node payloads and may preferably recover the radar echoes for simultaneous sensing. This may exemplarily be accomplished by capitalizing on the channel estimates of the mobile network nodes and/or, preferably and, the radar transmitting network nodes especially from the pilot acquisition and training phase.

More specifically, during the uplink payload duration, the radar transmitting network nodes may be assigned to transmit one or more symbols at the same time-frequency resources as the mobile network nodes. This can be done via signaling through the fronthaul, wireless signaling over the air or by some other signaling capabilities.

Moreover, the radar receiving network nodes may receive a sum of communication signals and radar echoes originating from the mobile network nodes and/or, preferably and, the radar transmitting network nodes. The radar receiving network nodes may use the channel estimates (especially as mentioned above) preferably to reject the respective mobile network node and radar transmitting network node interference especially to recover the data exemplarily following the communication standard, advantageously without the need for any modifications.

Furthermore, the radar receiving network nodes may preferably recover the radar echoes and may especially detect scatterers or interacting objects, respectively, and may estimate the motion and movement of scatterers in the environment. The scatterers may thus be stationary or moving scatterers such as pedestrians, vehicles, or something else.

In this context, it is noted that the detection of scatterers and estimation of the motion and movement of scatterers in the environment can be done in several ways and can be facilitated as follows:
As an option, multi-user interference cancellation can be used. Especially in the context of the uplink training, to limit the impact of the user interference on the radar subsystem, one may use the channel estimates especially from pilot acquisition and training to cancel the communications signals. This can be done with nullspace-based projection methods, covariance matrix inversion methods or something else.

As a further option, power control for radar and communications can be used. To limit the impact of the user interference, one may perform a power control procedure, where the user equipment transmits at a power level that is set to facilitate a desired communications performance level, while also minimizing the interference on the radar receiving network nodes. This can be done by a linear programming formulation, largest large scale fading based heuristic, or something else. Using such an user equipment power control might be particularly advantageous to achieve a very good radar performance.

Especially in the context of the uplink training, in order to facilitate improved detection of scatterers, the network may assign the radar transmitting network nodes to spread their transmitted signals over one or more frames especially comprising of the pilot phase 21 and the uplink phase 22. When the radar receiving network nodes have received the data, they may preferably process all data jointly or together at the same time, respectively, in order to improve the signal to interference and noise ratio (SINR) of the echoes. This may especially be done by exploiting the ranging, Doppler and angular information in the received data, and can be carried out by processing the data acquired from one or more radar receiving network nodes jointly. The processing can be done using non-coherent integration, partially coherent integration, matched filtering, generalized likelihood ratio-based processing, a combination thereof or another technique being suitable for this purpose. Said processing can be done with the aid of the at least one control unit or the central processing unit.

As a further option, estimation of location and movement can be used. After detection of scatterers, the location and movement of the scatterers are estimated. This can be done using one or more radar receiving network nodes, with distributed processing methods such as non-coherent integration, coherent integration, partially coherent integration, or multistatic processing methods such as multilateration, least squares processing, maximum likelihood processing.

With general respect to the invention, it should be noted that radar transmitting network node and/or radar receiving network node selection for detection can be used especially to guarantee a uniform detection performance over a given search area. The selection can be done by solving explicit optimization formulations or carrying out heuristic selection procedures. An example of the prior may include a minimum SNR/SINR formulation, and an example of the latter may include a minimum path-loss selection procedure.

In addition to this or as an alternative, radar transmitting network node and/or radar receiving network node selection for estimation of location and movement can be used especially to guarantee that radar transmitting network nodes and/or radar receiving network nodes are selected so that the location and movement estimation accuracy of scatterers in a given area can preferably be guaranteed to satisfy a given performance limit. This can be done by solving various Cramer-Rao lower bound formulations using, for instance, heuristic selection procedures or convex relaxation methods.

Furthermore, as already mentioned above, it should be pointed out again that especially from the communication's point of view, the radar transmitting network nodes are rather to be seen as additional users or mobile network nodes, respectively. Advantageously, no changes are required with respect to the corresponding communication system. For instance, training, interference rejection, detection, decoding, or the like can be done as usual for the respective communication system. In other words, especially from this perspective, the radar transmitting network nodes act as virtual users.

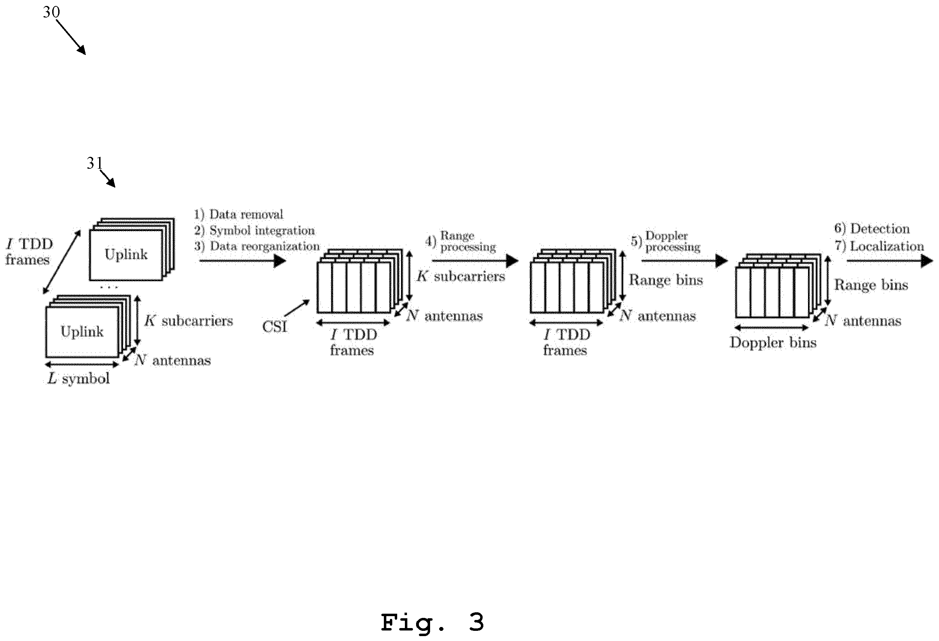

Now, with respect to Fig. 3, an exemplary overview 30 of radar signal processing in the sense of the invention is given especially regarding a static network node or at an access point, respectively. In this context, it is noted that the respective power control and multiuser interference suppression have exemplarily been omitted.

According to Fig. 3, with respect to the uplink payload 31, there are I TDD frames, wherein each TDD frame comprises L symbols, N antennas, and K subcarriers. It is noted that each static network node or access point, respectively, may especially comprises at least one antenna, preferably multiple antennas. Generally, with respect to Fig. 3, it might be particularly advantageous if Doppler processing over TDD frames 1...I is performed, followed by detection and localization processing over the corresponding spatially distributed antennas.

Specifically, especially for each TDD frame, an uplink training comprises at least one, preferably each, of estimating the respective instantaneous channels, building combining vectors for communications, and sending power control coefficients to the user equipment or the corresponding mobile network nodes, respectively.

Furthermore, especially for each TDD frame, an uplink payload handling comprises at least one, preferably each, of, with special respect to communication capabilities and preferably for each subcarrier and/or each symbol, decoding the respective uplink payload especially using the corresponding combining vectors, and with special respect to radar capabilities and preferably for each subcarrier and/or each symbol, removing the respective radar payload, accumulating or combining the corresponding (L) range-profiles coherently, suppressing respective multiuser interference, and building a range-profile over the corresponding (K) subcarriers.

With respect to building the range-profile over the corresponding subcarriers, it is noted that it might be particularly advantageous if a respective phase compensation is performed. Moreover, the following assumptions might be advantageous in the foregoing context:
Especially since the static network nodes or the access points, respectively, are typically part of the corresponding system or infrastructure, respectively, known antenna locations can be assumed. Said antenna locations can exemplarily be acquired manually, with the aid of GNSS (global navigation satellite system), or with the aid of self-localization schemes.

Furthermore, it might be assumed that the static network nodes or access points, respectively, are synchronized and coherent. For instance, this can be achieved through the corresponding fronthaul or over-the-air.

It is further noted that it might also be assumed that that the static network nodes or access points, respectively, are calibrated, which can exemplarily be done during the corresponding manufacturing.

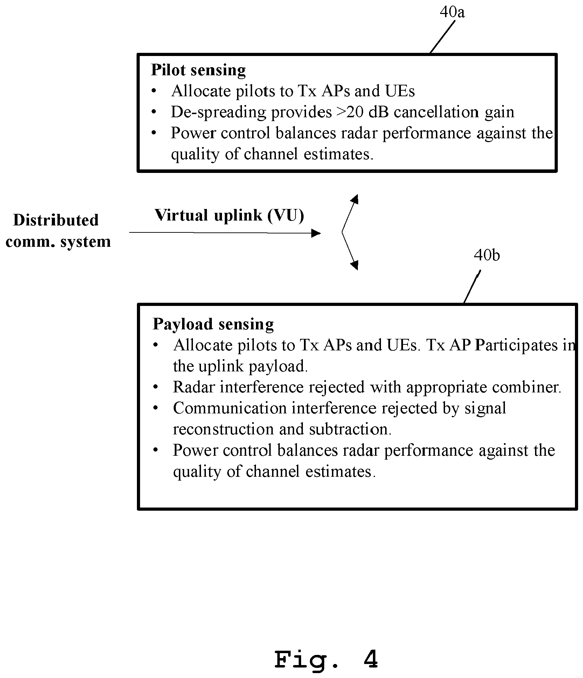

Now, according to an exemplary flow chart of Fig. 4, with special respect to a distributed communication system or a cell-free system in the sense of the invention, especially after a virtual uplink exemplarily in the context of the uplink training, the functionality especially regarding pilot sensing 40a and payload sensing 40b are exemplarily summarized.

With respect to the above-mentioned distributed communication system, it is noted that a distributed system or a distributed network, respectively, may be a type of network that is spread over different networks. This advantageously provides a single data communication network, which can be managed jointly or separately by each network. Besides shared communication within the network, a distributed network often also distributes processing.

As it can be seen, with respect to said pilot sensing 40a, the respective functionality comprises at least one, preferably each, of allocating pilots to radar transmitting network nodes or radar transmitting access points (Tx APs), respectively, and mobile network nodes or user equipment (UEs), respectively, de-spreading, which may advantageously provide more than 20 dB cancellation gain or channel isolation, respectively, and power controlling, which may advantageously balance the respective radar performance against the quality of the corresponding channel estimates.

Furthermore, with respect to said payload sensing 40b, the respective functionality comprises at least one, preferably each, of allocating the respective pilots to the corresponding Tx APs and UEs, wherein at least one, preferably each, of the Tx APs preferably participates in the corresponding uplink payload, rejecting radar interference with an appropriate combiner, rejecting communication interference by a signal reconstruction and subtraction, and power controlling, which may advantageously balance the respective radar performance against the quality of the corresponding channel estimates.

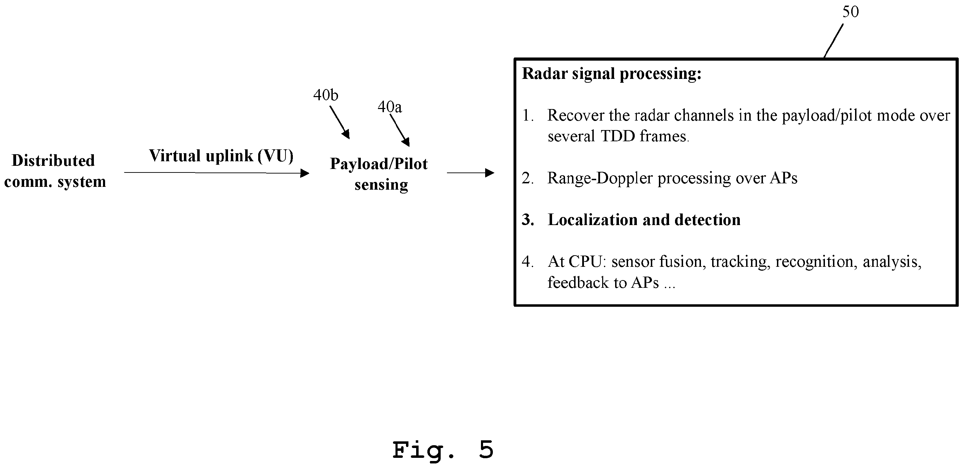

Moreover, Fig. 5 illustrates an exemplary continuation of the flow chart according to Fig. 4. In this context, especially after the above-mentioned payload sensing 40b and pilot sensing 40a, the respective functionality of radar signal processing comprises at least one, preferably each, of recovering the respective radar channels in the payload and/or pilot mode preferably over several corresponding TDD frames, performing range-Doppler processing over the respective static network nodes or the access points (APs), respectively, performing a corresponding localization and/or detection, and performing, especially at the at least one processing unit or the central processing unit, respectively, at least one of sensor fusion, tracking, recognition, analysis, feedback to the APs, or any combination thereof.

With respect to the above-mentioned performing range-Doppler processing over the respective static network nodes or the access points, it is noted that it might be particularly advantageous if range-Doppler processing is performed in each AP individually.

Further advantageously, especially at the central processing unit or locally, the corresponding target lists, exemplarily comprising the respective range-Doppler angles and/or amplitudes, originating from each individual AP can be fused.

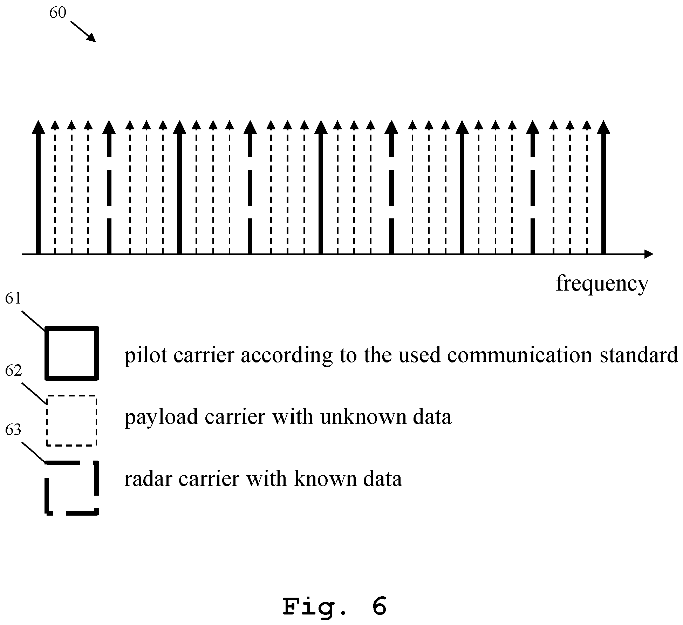

Now, with respect to Fig. 6, an exemplary distribution 60 of pilot, payload, and radar carriers in the sense of the invention is illustrated. As it can be seen from Fig. 6, said distribution 60 comprises pilot carriers 61 especially according to the corresponding used communication standard, payload carriers 62 especially with unknown data, and radar carriers 63 especially with known data.

In this context, it is noted that the payload, especially user equipment payload, and radar carriers can overlap in time and frequency.

With respect to the inventive radar carriers 63, it is noted that said radar carriers 63 may especially be seen as pseudo pilots or a kind thereof. Said pseudo pilots are preferably transmitted by the at least one radar transmitting network node or the radar transmitting access points, respectively. With respect to the payload carriers 62, it is noted that said payload carriers 62 are preferably transmitted by the at least one mobile network node or the user equipment, respectively.

It is further noted that it might be particularly advantageous if the payload with respect to the user equipment is selected such that a carrier structure with pseudo pilots in regular bin spacing and equal amplitude and phase is achieved. Advantageously, the corresponding reflection pulses appear in the time domain when transformed to the time domain by a digital Fourier transformation, especially by FFT (fast Fourier transform).

Furthermore, it might be particularly advantageous if the corresponding antennas are set up spatially equidistant. Accordingly, a two-dimensional digital Fourier transformation, especially FFT, can be calculated (especially in frequency and spatial direction). Then, even sharper peeks can be obtained in the time domain or in the mapping of the corresponding angles, respectively, which leads to an even more precise statement about the location of the respective reflections.

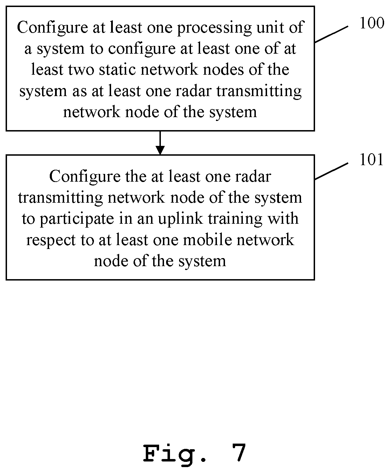

Moreover, Fig. 7 shows a flow chart of an embodiment of the inventive method for communication with radar sensing with respect to at least one radar target. In a first step 100, at least one processing unit of a system is configured to configure at least one of at least two static network nodes of the system as at least one radar transmitting network node of the system. Furthermore, in a second step 101, the at least one radar transmitting network node of the system is configured, especially with the aid of the at least one processing unit, to participate in an uplink training with respect to at least one mobile network node of the system.

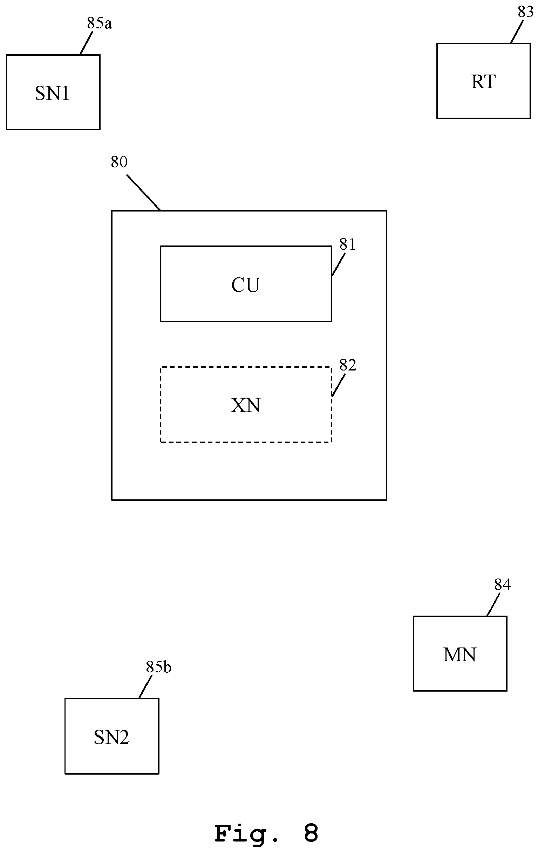

Finally, Fig. 8 illustrates an exemplary embodiment of the inventive device 80 for wireless communication with radar sensing with respect to at least one radar target 83 with the aid of at least one mobile node, exemplarily mobile node 84, and at least two static nodes, exemplarily static nodes 85a and 85b.

According to Fig. 8, said device 80 comprises a control unit 81, wherein the control unit 81 is configured to configure at least one of the static nodes 85a and 85b as at least one radar transmitting node.

In addition to this, the control unit 81 is configured to configure the at least one radar transmitting node to participate in an uplink training with respect to the mobile node 84.

It is noted that it might be particularly advantageous if the device 80 further comprises the mobile node 84 or at least one of the static nodes 85a, 85b as illustrated by the optional node unit 82 according to Fig. 8.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A system (10) for wireless communication with radar sensing with respect to at least one radar target (11a, 11b), the system (10) comprising:
at least one control unit (12),
at least one mobile node (13a, 13b), and
at least two static nodes (14a-g),
wherein the at least one control unit (12) is configured to configure at least one of the at least two static nodes as at least one radar transmitting node (14a, 14b), and wherein the at least one radar transmitting node (14a, 14b) is configured to participate in an uplink training with respect to the at least one mobile node (13a, 13b).

2. The system (10) according to claim 1,
wherein especially in the context of the uplink training, the at least one static node being not configured as the at least one radar transmitting node is configured as at least one radar receiving node (14c-g) preferably by the system (10) or the at least one control unit (12).

3. The system (10) according to claim 1 or 2,
wherein especially in the context of the uplink training, the system (10) or the at least one control unit (12), preferably the at least one static node being not configured as the at least one radar transmitting node, is configured to allocate pilot sequences to the at least one radar transmitting node (14a, 14b) and/or the at least one mobile node (13a, 13b).

4. The system (10) according to any of the claims 1 to 3,
wherein the at least one mobile node (13a, 13b) comprises or is a mobile phone or any movable communication device, and/or
wherein the at least two static nodes (14a-g) comprise or are access points.

5. The system (10) according to any of the claims 1 to 4, wherein the at least two static nodes (14a-g) are connected to the at least one control unit (12) especially via a wireless or wired fronthaul (15).

6. The system (10) according to any of the claims 1 to 5,
wherein the system (10) is a wireless system, and/or
wherein the system (10) is a cell-free system, and/or
wherein the system (10) is a multiple input multiple output system, and/or
wherein the system (10) is based on time division duplex.

7. The system (10) according to any of the claims 1 to 6, wherein especially in the context of the uplink training, the system (10) or the at least one control unit (12), preferably the at least one static node being not configured as the at least one radar transmitting node, is configured to perform at least one corresponding channel estimation with respect to the at least one radar transmitting node (14a, 14b) and/or the at least one mobile node (13a, 13b).

8. The system (10) according to claim 7,
wherein the at least one control unit (12) comprises or is a central processing and/or control unit, wherein the at least one corresponding channel estimation is performed by said central processing and/or control unit.

9. The system (10) according to claim 7 or 8,
wherein especially on the basis of the at least one corresponding channel estimation, the system (10) or the at least one control unit (12), preferably the at least one static node being not configured as the at least one radar transmitting node, is configured to perform radar signal processing with respect to the at least one radar transmitting node (14a, 14b) preferably in order to localize the at least one radar target (11a, 11b).

10. The system (10) according to claim 9,
wherein the radar signal processing comprises or is multistatic radar processing, and/or
wherein the radar signal processing estimates and/or makes use of at least one of amplitude, range, Doppler, angle of arrival, angle of departure, or any combination thereof.

11. The system (10) according to any of the claims 1 to 10, wherein especially based on the uplink training, the at least one radar transmitting node (14a, 14b) is configured to transmit known data preferably in the respective uplink payload.

12. The system (10) according to any of the claims 1 toll, wherein especially based on the uplink training, the at least one mobile node (13a, 13b) is configured to transmit unknown data preferably in the respective uplink payload.

13. The system (10) according to any of the claims 1 to 12, wherein especially on the basis of the known data and/or unknown data according to claim 11 and/or 12, the system (10) or the at least one control unit (12), preferably the at least one static node being not configured as the at least one radar transmitting node, is configured to recover at least one radar echo and/or at least one mobile node payload preferably by using the at least one corresponding channel estimation according to any of the claims 7 to 10.

14. A method for wireless communication with radar sensing with respect to at least one radar target (11a, 11b), the method comprising the steps of:
configuring (100) at least one control unit (12) of a system (10) to configure at least one of at least two static nodes (14a-g) of the system (10) as at least one radar transmitting node (14a, 14b) of the system (10), and
configuring (101) the at least one radar transmitting node (14a, 14b) of the system (10) to participate in an uplink training with respect to at least one mobile node (13a, 13b) of the system (10).

15. The method according to claim 14,
wherein especially in the context of the uplink training, the at least one static node being not configured as the at least one radar transmitting node is configured as at least one radar receiving node (14c-g) preferably by the system (10) or the at least one control unit (12).

16. A device (80) for wireless communication with radar sensing with respect to at least one radar target (83) with the aid of at least one mobile node (84) and at least two static nodes (85a, 85b), the device (80) comprising:
a control unit (81),
wherein the control unit (81) is configured to configure at least one of the at least two static nodes (85a, 85b) as at least one radar transmitting node, and
wherein the control unit (81) is configured to configure the at least one radar transmitting node to participate in an uplink training with respect to the at least one mobile node (84).

17. The device (80) according to claim 16,
wherein the device (80) further comprises at least one of the at least one mobile node (84) or at least one of the at least two static nodes (85a, 85b).
